# FASCICULE DE BREVET EUROPEEN

(11) **EP 3 317 800 B1**
(45) Date de publication et mention de la délivrance du brevet: **13.05.2020**
(21) Numéro de dépôt: 16747819.7
(22) Date de dépôt: 28.06.2016
(51) Int. Cl.: G06F 21/31

(54) **PROCÉDÉ DE GESTION DE PROFILS DANS UN ÉLÉMENT SÉCURISÉ**
VERFAHREN ZUR VERWALTUNG VON PROFILEN IN EINEM SICHEREN ELEMENT
METHOD OF MANAGING PROFILES IN A SECURE ELEMENT

(30) Priorité: 30.06.2015 FR 1556148
(43) Date de publication de la demande: 09.05.2018
(73) Titulaire: IDEMIA France, 92700 Colombes (FR)
(72) Inventeur: DUMOULIN, Jérôme, 92700 Colombes (FR); MICHEL, Alexis, 92700 Colombes (FR)
(74) Mandataire: Santarelli
(86) Numéro de dépôt international: PCT/FR2016/051605
(87) Numéro de publication internationale: WO 2017/001770

(56) Documents cités:
- Gsma: "Official Document 12FAST.13 - Embedded SIM Remote Provisioning Architecture Version 1.1", , 17 décembre 2013 (2013-12-17), XP055135431, Extrait de l'Internet: URL:http://www.gsma.com/connectedliving/wp -content/uploads/2014/01/1.-GSMA-Embedded- SIM-Remote-Provisioning-Architecture-Versi on-1.1.pdf [extrait le 2014-08-20]
- V1 ET AL: "GSM Association Non-confidential Official Document 12FAST.15 -Remote Provisioning Architecture for Embedded UICC Technical Specification Remote Provisioning Architecture for Embedded UICC Technical Specification Security Classification: Non-confidential GSM Association Non-confidential Official Docu", , 17 décembre 2013 (2013-12-17), XP055166288, Extrait de l'Internet: URL:http://www.gsma.com/connectedliving/wp -content/uploads/2014/01/2.-GSMA-Remote-Pr ovisioning-Architecture-for-Embedded-UICC- Technical-Specification-Version-1.0.pdf [extrait le 2014-08-20]
- V1 ET AL: "GSM Association Non-confidential Official Document 12FAST.15 -Remote Provisioning Architecture for Embedded UICC Technical Specification Remote Provisioning Architecture for Embedded UICC Technical Specification Security Classification: Non-confidential GSM Association Non-confidential Official Docu", , 17 December 2013 (2013-12-17), XP055166288, Retrieved from the Internet: URL:http://www.gsma.com/connectedliving/wp -content/uploads/2014/01/2.-GSMA-Remote-Pr ovisioning-Architecture-for-Embedded-UICC- Technical-Specification-Version-1.0.pdf

## Description

La présente invention concerne un procédé de gestion de profils dans un élément sécurisé.

Un élément sécurisé, tel qu'une carte à puce, est utilisé dans un dispositif hôte. Le dispositif hôte est par exemple un téléphone portable ou autre terminal de communication mobile, tel qu'une tablette.

Un élément sécurisé peut être intégré de manière amovible dans le dispositif hôte, comme par exemple une carte de type UICC (pour « *Universal Integrated Circuit Card* ») visée dans la norme ETSI TS 102 221, et regroupe les cartes à puce classiques, type carte SIM (ou USIM - pour « *Universal Subscriber Identity Module* »), mais également des jetons (*token*) sécurisés, tous identifiables de manière unique. Le second type d'élément sécurisé évoqué peut être embarqué (par exemple soudé) dans le dispositif hôte, comme par exemple une carte de type eUICC (pour « *embeded Universal Integrated Circuit Card* ») et visée dans la norme ETSI TS 103 383. Un élément sécurisé embarqué sous l'appellation d'eSE est connu en nomenclature anglo-saxonne comme « *embedded secure element* » et visé dans la spécification GlobalPlatform Card Specification Version 2.2.1 relative à la technologie GlobalPlatform.

Ainsi, un utilisateur du dispositif hôte peut remplacer une première carte de type UICC par une seconde carte de type UICC, par exemple lorsqu'il souhaite basculer d'un premier réseau de communication géré par un premier opérateur à un deuxième réseau de communication géré par un second opérateur qui peut éventuellement être le même opérateur.

On notera qu'un réseau de communication comporte un ensemble d'équipements d'un opérateur permettant la connexion et la connectivité de ses abonnés. Deux réseaux de communication, notamment des réseaux de téléphonie mobile, peuvent reposer sur une même infrastructure mis à part quelques équipements propres à chaque opérateur.

On notera que l'utilisateur ne peut pas remplacer aisément une carte de type eUICC au sein du dispositif hôte.

Néanmoins, les éléments sécurisés, embarqués ou non peuvent fonctionner selon différents profils chargés en mémoire, pour basculer d'un premier réseau de communication géré par un opérateur à un deuxième réseau de communication géré par un second opérateur, éventuellement identique au premier opérateur. Chaque profil est identifié, dans l'élément sécurisé, par un identifiant unique.

Selon la norme GSMA 12FAST.15, un profil est une combinaison d'une structure de fichiers, de données et d'applications mise à disposition ou présente dans l'élément sécurisé et qui permet l'accès à une infrastructure de réseau de communication lorsqu'il est activé.

Un profil est actif lorsque la structure de fichiers et/ou les applications peuvent être sélectionnées à travers une interface du dispositif hôte contenant l'élément sécurisé, telle qu'une carte de type eUICC ou de type UICC.

Les normes GSMA 12FAST.13 et GSMA 12FAST.15 prévoient une procédure d'activation des profils, notamment à l'aide de commandes *ad hoc.*

En outre, ces normes prévoient une procédure d'activation alternative ou de repli ou mécanisme alternatif ou de repli (« *Fall-back Activation Procedure* » ou « *Fall-back Mechanism* ») pour basculer automatiquement d'un profil actif à un profil de repli dans des conditions particulières de fonctionnement.

Cette procédure de repli est notamment déclenchée lorsque l'élément sécurisé, tel qu'une carte de type eUICC, perd la connexion avec l'infrastructure de réseau de communication auquel il est préalablement connecté avec le profil qui a été activé ou « *profil actif* ». Cette procédure est décrite au paragraphe 3.16 de la norme GSMA 12FAST.15 et au paragraphe 3.5.13 de la norme GSMA 12FAST.13.

Durant cette procédure, l'élément sécurisé met en œuvre une désactivation du profil actif et une activation d'un autre profil, identifié par un attribut « *Fall-back* » (« *Fall-back Attribute* ») activé.

Selon les normes GSMA 12FAST.13 et GSMA 12FAST.15, l'attribut « *Fall-back* » est un attribut permettant l'identification du profil devant être activé dans le mécanisme de repli (« *Fall-back Mechanism* »). Un seul profil à la fois au sein d'une carte de type eUICC peut avoir l'attribut « *Fall-back* » activé (voir la norme GSMA 12FAST.15 au paragraphe 4.1.1.7).

Ainsi, lorsque la carte de type eUICC ou tout élément sécurisé perd la connexion qu'il a avec un premier réseau de communication à travers un profil associé au premier réseau de communication, il peut basculer automatiquement sur un deuxième réseau de communication à l'aide d'un deuxième profil associé au deuxième réseau de communication, le deuxième profil ayant été activé par la procédure de repli.

Ainsi, l'eUICC récupère une connexion et une connectivité.

La gestion de profils actuellement proposée par ces normes n'est pas satisfaisante.

La présente invention propose d'améliorer cette situation.

A cet effet, la présente invention propose selon un premier aspect un procédé de gestion de profils dans un élément sécurisé, l'élément sécurisé comprenant un premier profil associé à un premier réseau de communication et un deuxième profil associé à un deuxième réseau de communication, le premier profil étant actif, le procédé comprenant les étapes de :
- désactivation du premier profil ; et
- activation du deuxième profil.

Le procédé de gestion de profils est caractérisé en ce que les étapes de désactivation et d'activation sont mises en œuvre à la suite de la détection d'un échec lors d'une vérification locale mise en œuvre dans ledit élément sécurisé et portant sur le premier profil pour l'utilisation de ce dit premier profil.

Bien entendu, une telle détection peut comprendre une ou plusieurs étapes de vérification portant sur le premier profil, par exemple des vérifications relatives à la sécurité concernant le premier profil. Et c'est lors d'un échec de vérification que les désactivation et activation sont mises en œuvre.

Ainsi, lorsqu'un échec est détecté, l'élément sécurisé met en œuvre l'activation d'un deuxième profil au détriment du premier profil défaillant. L'élément sécurisé peut alors être utilisé à travers le deuxième profil, sans demeurer inopérant.

En d'autres termes, l'élément sécurisé redevient disponible pour être utilisé, alors que le premier profil actif a été défaillant ou est bloqué.

En effet, outre la perte de la connexion à l'infrastructure de réseau de communication comme prévue dans la norme, d'autres situations rendent l'élément sécurisé, ainsi que le dispositif hôte contenant l'élément sécurisé, inutilisables et donc incapables de se connecter au réseau de communication.

C'est par exemple le cas lorsque l'élément sécurisé met en œuvre des vérifications relatives à la sécurité dans l'utilisation d'un dispositif hôte à travers un profil, telles que la vérification de l'authentification d'un utilisateur ou de l'infrastructure de réseau de communication, ou de l'intégrité des données ou applications téléchargées dans l'élément sécurisé et par conséquent modifiant le profil actif et mettant à mal son intégrité de fonctionnement.

Selon une caractéristique, l'élément sécurisé est non amovible dans un dispositif hôte.

Selon une caractéristique, le procédé de gestion de profils comporte une étape d'émission, à destination d'un dispositif hôte connecté audit élément sécurisé, d'une commande de redémarrage de l'élément sécurisé afin de déclencher une procédure d'attachement de l'élément sécurisé au deuxième réseau de communication à l'aide du deuxième profil activé.

Selon une autre caractéristique, le procédé de gestion de profils comporte une étape de notification de la désactivation du premier profil et de l'activation du deuxième profil, à des infrastructures associées respectivement aux premier et deuxième réseaux de communication.

Selon un mode de réalisation, la vérification locale comprend une étape de vérification dans l'élément sécurisé de l'autorisation de l'accès d'un utilisateur audit premier profil. Dans ce cas, un échec de sécurité est détecté dans l'élément sécurisé en cas d'échec de vérification.

Ainsi, l'autorisation d'accès d'un utilisateur au premier profil est vérifiée. Bien entendu, d'autres conditions peuvent intervenir pour déterminer que la vérification a conduit à un échec. Par exemple, dans les exemples ci-dessous, il est courant d'attendre trois vérifications erronées d'un code type PIN pour déclencher une action sécuritaire, par exemple le blocage de la carte. C'est lorsque la carte est bloquée que l'échec de sécurité est détecté.

Selon une caractéristique, la vérification dans l'élément sécurisé de l'autorisation de l'accès d'un utilisateur comporte la vérification d'un numéro d'identification personnel (PIN) associée au premier profil.

Selon une autre caractéristique, la vérification dans l'élément sécurisé de l'autorisation de l'accès d'un utilisateur comporte la vérification d'une clé de déblocage personnelle (PUK) associée au premier profil.

Selon une caractéristique particulière, le procédé de gestion de profils comporte une étape de blocage du profil actif de l'élément sécurisé lors de l'échec de vérification. Ainsi, lorsqu'à la suite d'une vérification relative à la sécurité concernant un profil actif, le profil actif est bloqué, l'élément sécurisé est rendu inutilisable à travers ce profil.

Par exemple, lorsqu'un échec se produit lors de la vérification relative à la sécurité concernant le profil actif, un message d'erreur contenant une information représentative de l'échec est généré.

Selon une autre caractéristique, la vérification dans l'élément sécurisé de l'autorisation de l'accès d'un utilisateur comporte la vérification de données d'authentification de l'utilisateur.

Ainsi, l'autorisation d'un réseau de communication à accéder au premier profil est vérifiée.

Dans un mode de réalisation, la vérification locale comprend une étape de vérification de l'intégrité du premier profil pour détecter un fonctionnement corrompu de celui-ci.

Ainsi, il est prévu une vérification du fonctionnement corrompu ou non corrompu du premier profil, et/ou de fonctionnalités reposant directement sur ce premier profil

Ainsi, il est prévu une vérification du fonctionnement corrompu ou non corrompu du premier profil, et/ou de fonctionnalités reposant directement sur ce premier profil.

Le fonctionnement du premier profil peut être erroné lorsque le premier profil est modifié avec des données erronées ou corrompues.

Selon une caractéristique, la vérification de l'intégrité dudit premier profil est effectuée durant une phase d'activation dudit premier profil.

Selon une caractéristique, le procédé de gestion de profils comprend en outre une étape de réactivation du premier profil, l'étape de réactivation comportant la désactivation du deuxième profil et l'activation du premier profil.

Ainsi, une fois que le premier profil a été désactivé et le deuxième profil a été activé, le premier profil est réactivé.

Selon un mode de réalisation, l'étape de réactivation du premier profil est mise en œuvre à réception, dans ledit élément sécurisé, d'une requête d'activation du premier profil, la requête d'activation provenant du premier réseau de communication associé au premier profil.

Selon une caractéristique, la requête d'activation du premier profil est générée à la demande d'un utilisateur.

Alternativement, la requête d'activation du premier profil est générée après l'écoulement d'une période de temps prédéterminée à compter d'une notification informant de la désactivation dudit premier profil dans l'élément sécurisé.

L'invention concerne selon un deuxième aspect, un élément sécurisé comprenant un premier profil associé à un premier réseau de communication et un deuxième profil associé à un deuxième réseau de communication, le premier profil étant actif, l'élément sécurisé comprenant :
- des moyens de désactivation du premier profil ; et
- des moyens d'activation du deuxième profil ;
l'élément sécurisé étant configuré pour que les moyens de désactivation et d'activation soient mis en œuvre à la suite de la détection d'un échec lors d'une vérification locale mise en œuvre dans ledit élément sécurisé et portant sur ledit premier profil pour l'utilisation de ce dit premier profil.

L'invention concerne selon un troisième aspect, un dispositif hôte comportant un élément sécurisé conforme à l'invention.

Dans un mode de réalisation, le dispositif hôte est un terminal mobile de communication.

L'élément sécurisé et le dispositif hôte présentent des caractéristiques et avantages analogues à ceux décrits précédemment en relation avec le procédé de gestion de profils.

D'autres particularités et avantages de l'invention apparaîtront encore dans la description ci-après.

Aux dessins annexés, donnés à titre d'exemples non limitatifs :
- la figure 1 représente schématiquement un dispositif hôte comprenant un élément sécurisé embarqué conforme à un mode de réalisation de l'invention ;
- la figure 2 illustre schématiquement un exemple de système de communication dans lequel un mode de réalisation de la présente invention peut être mis en œuvre; et
- les figures 3 et 4 représentent schématiquement des étapes d'un procédé de changement d'un profil selon un mode de réalisation de l'invention.

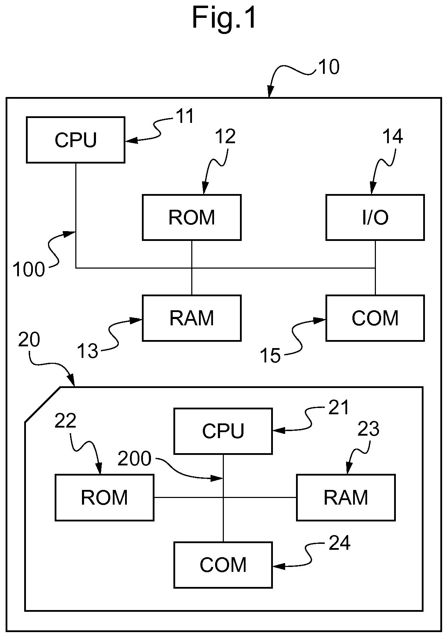

La Figure 1 représente schématiquement un dispositif hôte 10 comprenant un élément sécurisé 20 conforme à un mode de réalisation de l'invention.

Le dispositif hôte 10 est par exemple un terminal mobile, un téléphone portable, une tablette numérique ou tout type d'équipement électronique tel qu'un compteur électrique, un véhicule, une machine à café, etc. L'élément sécurisé 20 est incorporé dans le dispositif hôte 10.

Le dispositif hôte 10 comprend un bus de communication 100 auquel sont reliées :
- une unité de traitement 11, nommée sur la figure CPU (pour « *Central Processing Unit* ») et pouvant comporter un ou plusieurs processeurs ;
- une mémoire non volatile 12, par exemple ROM (pour « *Read Only Memory* »), EEPROM (pour « *Electrically Erasable Read Only Memory* ») ou une mémoire Flash;
- une mémoire vive 13 ou RAM (pour « *Random Access Memory* ») ;
- une interface 14 d'entrée/sortie, nommée sur la figure I/O (pour « *Input*/*Output* »), par exemple un écran, un clavier, une souris ou un autre dispositif de pointage tel qu'un écran tactile ou une télécommande permettant à un utilisateur d'interagir avec le système via une interface graphique ; et
- une interface de communication150, nommée COM sur la figure, adaptée à échanger des données par exemple avec un serveur SM-SR via un réseau, ou une interface de lecture/écriture.

L'élément sécurisé 20 est par exemple une carte à circuit intégré universelle et embarquée (eUICC) conforme à la norme ETSI TS 103 383 ou ETSI 102 221.

Il comprend un bus de communication 200 auquel sont reliées :
- une unité de traitement 21 ou microprocesseur, nommée sur la figure CPU (pour « *Central Processing Unit* ») ;
- une mémoire non volatile 22, par exemple ROM (pour « *Read Only Memory* »), EEPROM (pour « *Electrically Erasable Read Only Memory* ») ou mémoire Flash;
- une mémoire vive 23 ou RAM (pour « *Random Access Memory* ») ; et
- une interface de communication 24, nommée COM sur la figure, adaptée à échanger des données avec le processeur 11 du dispositif hôte 10.

La mémoire vive 23 comprend des registres adaptés à l'enregistrement des variables et paramètres créés et modifiés au cours de l'exécution d'un programme informatique comprenant des instructions pour la mise en œuvre d'un procédé selon l'invention. Les codes d'instructions du programme stocké en mémoire non-volatile 22 sont chargés en mémoire RAM 23 en vue d'être exécutés par l'unité de traitement CPU 21.

La mémoire non-volatile 22 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre des procédés selon l'invention.

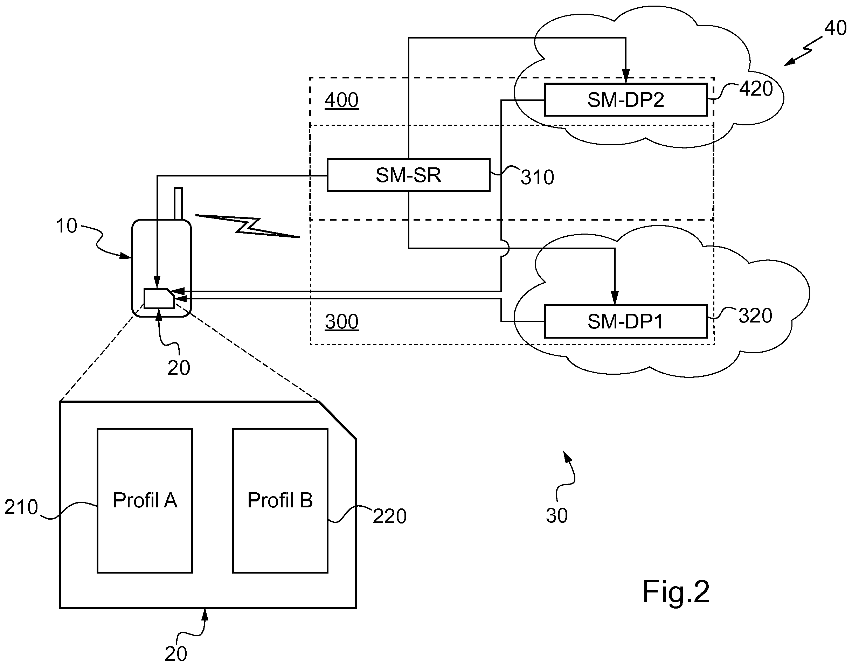

La **figure 2** représente schématiquement un exemple de système de communication dans lequel un mode de réalisation de la présente invention peut être mis en œuvre.

En particulier, la figure 2 représente un dispositif hôte 10 comportant un élément sécurisé 20, un premier réseau de communication 30 et un deuxième réseau de communication 40.

Le premier réseau de communication 30 et le deuxième réseau de communication 40 sont par exemple des réseaux de téléphonie mobile.

Le dispositif hôte 10 et l'élément sécurisé 20 sont représentés sur la figure 1.

Le dispositif hôte 10 est par exemple un terminal mobile tel qu'un téléphone mobile ou une tablette, et l'élément sécurisé 20 est un élément sécurisé embarqué tel qu'une carte de type eUICC.

Dans le mode de réalisation décrit, l'élément sécurisé 20 peut communiquer avec deux réseaux de communication 30, 40.

Un opérateur d'un réseau de communication 30, 40 est représenté par un serveur de préparation des données 320, 420, nommé SM-DP (pour « *Subscription Manager Data Préparation* »)*.* Un serveur SM-DP 320, 420 produit des profils et les fournit à l'élément sécurisé 20.

Ainsi, dans le mode de réalisation décrit, deux serveurs SM-DP représentent respectivement deux opérateurs des deux réseaux de communication 30, 40.

Un serveur SM-SR 310 (pour « *Subscription Manager Secure Routine* ») est une entité représentative de l'élément sécurisé 20 et est configuré pour communiquer avec les serveurs SM-DP 320, 420.

L'ensemble formé par un serveur SM-DP 320, 420 et par le seul serveur SM-SR 310 forme un serveur de gestion d'abonnement appelé SM (pour « *Subscription Manager* ») 300, 400.

En effet, il s'agit d'un serveur SM « virtuel » dès lors qu'un seul serveur SM-SR 310 est utilisé.

Les rôles du serveur de routage sécurisé ou serveur SM-SR 310 et du serveur de préparation des données ou serveur SM-DP 320, 420 sont définis dans les normes GSMA 12FAST.13 et GSMA 12FAST-15. Le serveur SM-SR 310 est notamment chargé d'établir respectivement un canal sécurisé entre le réseau de communication 30, 40 et l'élément sécurisé 20 afin de charger, d'activer, de désactiver, ainsi que d'effacer les profils dans l'élément sécurisé 20. Le rôle principal du serveur SM-DP 320, 420 est notamment la préparation des données des profils ainsi que l'installation du profil sur l'élément sécurisé 20.

Dans des modes de réalisation, afin de faciliter la gestion des profils, l'élément sécurisé 20 comprend un registre de profils (« *Profile Registry* ») comprenant une base de données répertoriant un certain nombre d'informations sur les profils comme par exemple leur identifiant unique respectif.

Dans l'exemple de réalisation représenté sur la figure 2, deux profils, un premier profil 210 ou *profil A* et un deuxième profil 220 ou *profil B*, sont installés dans l'élément sécurisé 20.

Par exemple, le premier profil 210 est associé au premier réseau de communication 30 et le deuxième profil 220 est associé au deuxième réseau de communication 40.

Ainsi, le dispositif hôte 10, et en particulier l'élément sécurisé 20, peuvent par exemple communiquer avec les réseaux de communication 30, 40 à travers respectivement le premier profil 210 et le deuxième profil 220.

Bien entendu, le nombre de profils installés dans l'élément sécurisé 20, ainsi que le nombre de serveurs SM-DP liés au serveur SM-SR peut être supérieur à deux.

Dans l'exemple représenté, le premier profil 210 ou *profil A* correspond au profil couramment actif. Ainsi, le dispositif hôte 10 peut communiquer avec le premier réseau de communication 30 à travers le premier profil 210.

Dans l'exemple représenté, le deuxième profil 220 ou *profil B* correspond au profil ayant l'attribut « *Fall-back* » activé.

Ainsi, en cas d'initiation d'un mécanisme de repli (« *Fall-back Mecanism* »), le deuxième profil 220 est activé en remplacement du premier profil 210. Par conséquent, en cas de problème dans l'utilisation de l'élément sécurisé 20 lorsque le premier profil 210 est actif, le deuxième profil 220 est activé à son tour, le premier profil 210 étant alors rendu inactif. Le dispositif hôte 10 peut alors se connecter au deuxième réseau de communication 40 et être utilisé pour communiquer.

On notera qu'un seul profil à la fois peut être activé dans l'élément sécurisé 20, et qu'un seul profil à la fois peut avoir l'attribut « *Fall-back* » activé.

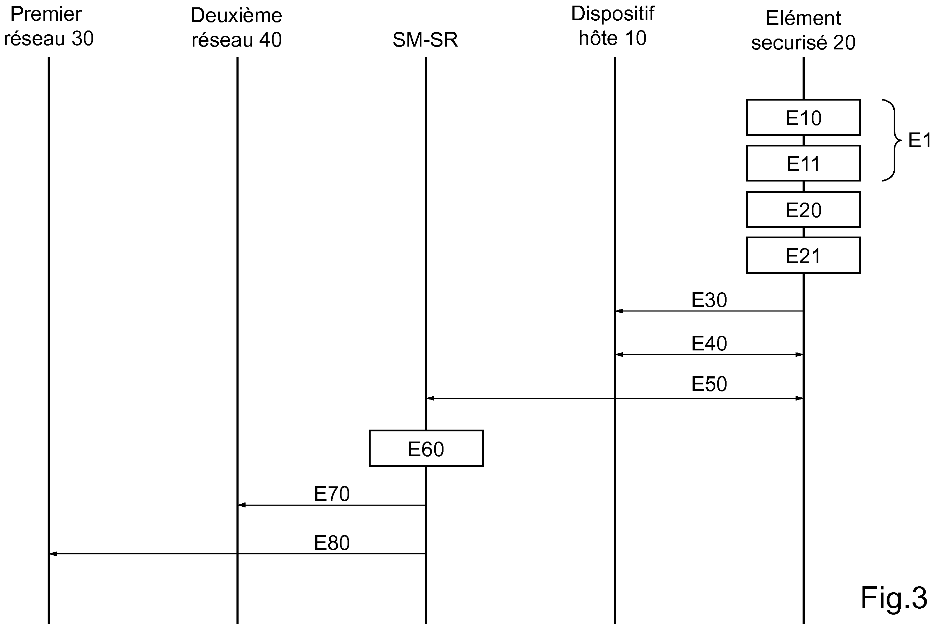

La **figure 3** représente schématiquement un mode de réalisation d'un procédé de gestion de profils dans un élément sécurisé 20, dans lequel l'élément sécurisé 20 comprend le premier profil 210 ou *profil A* actif.

Le procédé comporte une étape de vérification E1 relative à la sécurité concernant le premier profil 210.

Dans le mode de réalisation décrit, cette vérification E1 relative à la sécurité concernant le premier profil 210, comporte une vérification de l'autorisation de l'accès d'un utilisateur au premier profil 210.

Par exemple, la vérification de l'autorisation de l'accès d'un utilisateur comporte une étape de la vérification E10 d'un numéro d'identification personnel (PIN) associé au premier profil 210.

Dans un mode de réalisation, la vérification d'un numéro d'identification personnel est mise en œuvre un nombre de fois prédéterminé n, par exemple trois.

Lorsqu'un problème relatif à la sécurité concernant le premier profil 210 est constaté, notamment un ou plusieurs échecs successifs de vérification de code PIN, un message contenant une information représentative d'une erreur est généré.

De manière optionnelle, lorsqu'un message contenant une information représentative d'une erreur est généré lors de la vérification E10 du numéro d'identification personnel, la vérification de l'autorisation d'accès d'un utilisateur comporte en outre la vérification E11 d'une clé de déblocage personnelle (PUK) associée au premier profil 210.

Comme pour la vérification du numéro d'identification personnel, la vérification E11 de la clé de déblocage personnelle est mise en œuvre un nombre de fois prédéterminé m, par exemple trois.

Dans un autre mode de réalisation non représenté, la vérification de l'autorisation d'accès d'un utilisateur peut comporter, en outre ou au lieu des vérifications du numéro personnel et de la clé de déblocage personnelle, la vérification de données d'authentification de l'utilisateur, par exemple des données biométriques permettant d'identifier l'utilisateur.

La vérification d'un numéro d'identification personnel, d'une clé de déblocage personnelle, ou de données biométriques, est réalisée par comparaison des données introduites à l'aide d'une interface dans l'élément sécurisé 20 avec des données stockées dans des moyens de mémorisation (non représentés) de l'élément sécurisé 20. Ces types de vérification sont des vérifications courantes de l'homme du métier et ne nécessitent pas d'être décrits davantage ici.

Lorsqu'au moins l'une des vérifications d'autorisation de l'accès d'un utilisateur au premier profil 210 aboutit à un échec, un message contenant une information représentative d'une erreur, et donc d'un échec de sécurité, est généré. Le premier profil 210 est alors bloqué et une situation de blocage est générée.

Lorsqu'un échec dans la vérification relative à la sécurité concernant le premier profil 210 est détecté, le procédé comporte une étape de blocage du premier profil 210 contenu dans l'élément sécurisé 20.

A la suite de cette étape de blocage, l'élément sécurisé 20 ne peut plus utiliser le premier réseau de communication 30.

Lorsqu'une situation de blocage du premier profil 210 ou profil A est générée, le procédé de gestion de profils comporte en outre une étape de désactivation E20 du premier profil 210 puis une étape d'activation E21 du deuxième profil 220 ou profil B doté du « *Fall-Back attribute* ». Les mécanismes classiques d'activation et de désactivation de profils peuvent être mis en œuvre.

Une fois que le premier profil 210 est désactivé et le deuxième profil 220 est activé, l'élément sécurisé 20 émet, lors d'une étape d'émission E30, une commande destinée au dispositif hôte 10, cette commande déclenchant un redémarrage (reset) de l'élément sécurisé, et par la même, une nouvelle procédure d'attachement E40 de cet élément sécurisé à un réseau de communication, à l'aide du profil actif, c'est-à-dire dans le cas présent l'attachement au deuxième réseau de communication 40 à partir du deuxième profil 220.

La commande émise par l'élément sécurisé 20 à l'étape d'émission E30 comporte par exemple une commande REFRESH telle que décrite dans la norme GSMA 12FAST.15, notamment au paragraphe 3.16 concernant la procédure d'activation de repli (« *Fall-back Activation Procedure* »), conduisant au redémarrage de l'élément sécurisé 20.

Ce démarrage déclenche cette procédure d'attachement E40 au deuxième réseau 40 selon des mécanismes classiques. Puis l'élément sécurisé 20 met en œuvre une étape de notification 50 de la désactivation du premier profil 210 et de l'activation du deuxième profil 220 au serveur SM-SR. Lors de cette étape de notification E50, l'élément sécurisé 20 initie une procédure de notification telle que décrite au paragraphe 4.1.1.11 de la norme GSMA 12FAST.15.

La notification de la désactivation du premier profil 210 et de l'activation du deuxième profil 220 au serveur SM-SR est envoyée par exemple par SMS. La notification envoyée au serveur SM-SR par exemple par SMS contient une notification de type « *tag* », c'est-à-dire des données codées de façon à représenter un message donné.

Ainsi, par exemple, selon la norme GSMA 12FAST.15, le tag '04' indique qu'un profil a été changé à la suite d'une procédure de repli et le tag '05' qu'un profil a été changé à la suite d'une procédure de repli sans demande préalable du serveur SM-SR.

Selon un mode de réalisation, un particulier non prévu dans la norme, par exemple le tag '06' (mais tout autre valeur non déjà utilisée peut convenir), est ajouté pour indiquer la désactivation du premier profil 210 et l'activation du deuxième profil 220 à la suite d'un échec détecté lors de l'étape de vérification E1 portant sur le premier profil ou profil actif pour l'utilisation de ce profil actif. Par exemple, l'échec est un échec de sécurité détecté lors d'une étape de vérification relative à la sécurité du premier profil.

On notera que la vérification portant sur le premier profil est une vérification locale, c'est-à-dire qu'elle est mise en œuvre dans l'élément sécurisé 20.

Lors de cette procédure de notification, le serveur de gestion SM-SR 310 destinataire de cette notification est donc informé qu'un mécanisme de repli a été mis en œuvre à la suite de la détection d'un échec, et que le profil qui était actif, (ici le premier profil 210) a été désactivé et qu'un autre profil « *Fall-back* » (ici le deuxième profil 220) a été activé.

L'ensemble des informations concernant l'élément sécurisé (appelé « EIS » dans les normes GSMA 12FAST.13 et GSMA 12FAST.15, « EIS » pour « *eUICC Information Set* ») qui est enregistré dans le serveur SM-SR est alors mis à jour lors d'une étape de mise à jour E60, afin de concrètement déclarer le deuxième profil 220 comme profil actif et le premier profil 210 comme profil désactivé au sein des infrastructures de réseau de communication.

Puis, lors d'une première étape de notification E70, le serveur SM-SR notifie à l'opérateur du deuxième réseau de communication 40 que le deuxième profil 220 a été activé.

En outre, lors d'une deuxième étape de notification E80, le serveur SM-SR notifie à l'opérateur du premier réseau de communication 30 que le premier profil 210 a été désactivé.

On notera que les étapes E30 à E80 s'appuient sur les étapes décrites dans la norme GSMA 12FAST.15, notamment au paragraphe 3.16 concernant la procédure d'activation de repli (« *Fall-back Activation Procedure* »)*.*

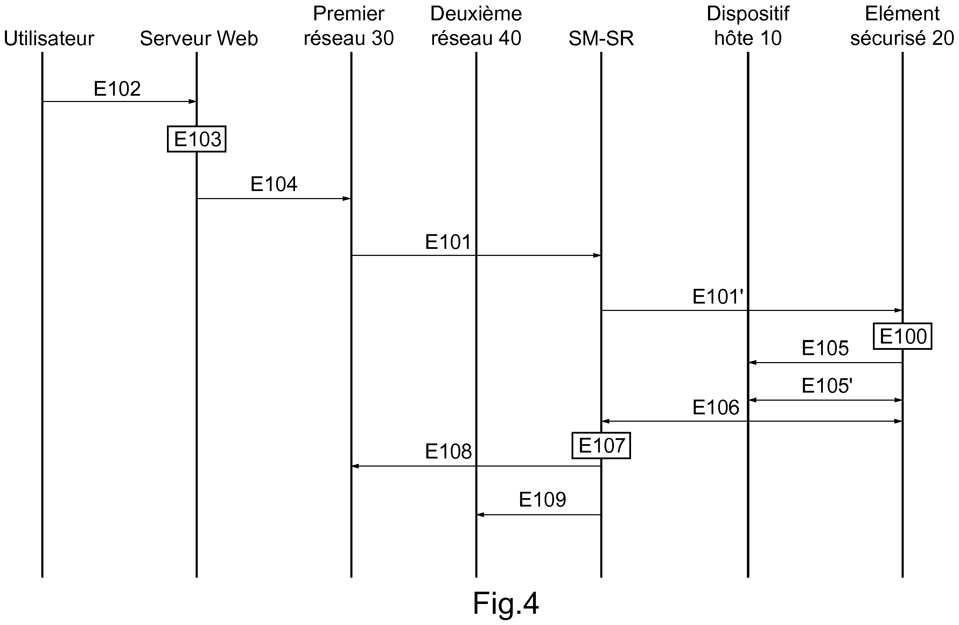

La **figure 4** représente des étapes supplémentaires à celles de la figure 3, du procédé de gestion de profils selon un mode de réalisation de l'invention.

Lorsqu'une situation de blocage du premier profil 210 a été générée (de façon générale, qu'un échec a été détecté) et que, par conséquence, le premier profil 210 a été désactivé et le deuxième profil 220 a été activé afin de rendre possible l'utilisation du dispositif hôte 10 ainsi que de l'élément sécurisé 20, le procédé de gestion de profils peut comprendre des étapes relatives à la réactivation du premier profil 210.

Ainsi, le procédé de gestion de profils peut comporter en outre une étape de réactivation E100 du premier profil 210, cette étape de réactivation E100 comportant la désactivation du deuxième profil 220 puis l'activation du premier profil 210.

L'étape de réactivation du premier profil 210 est mise en œuvre à réception E101', dans l'élément sécurisé 20, d'une requête d'activation du premier profil 210 émise par le serveur SM-SR.

Dans un mode de réalisation, la requête d'activation provient du premier réseau de communication 30 associé au premier profil 210.

En particulier, une première requête d'activation E101 dudit premier profil 210 est destinée au serveur SM-SR, qui en réponse émet à son tour une deuxième requête d'activation E101' du premier profil 210 destinée à l'élément sécurisé 20.

Dans le mode de réalisation représenté à la figure 4, la requête d'activation E101 du premier profil 210 est générée à la demande d'un utilisateur.

Par exemple, l'utilisateur demande la génération E102 d'un nouveau numéro personnel d'identification pour le premier profil 210, bloqué à la suite de plusieurs échecs de saisie d'un code PIN ou PUK ou de données d'authentification.

Pour ce faire, l'utilisateur se connecte à un serveur WEB associé au premier réseau de communication 30.

Selon des procédures connues, le serveur WEB du réseau de communication 30 vérifie lors d'une étape de vérification E103, l'identité de l'utilisateur ainsi que son autorisation d'accès au premier réseau de communication 30, par exemple en lui demandant de saisir son nom, adresse, date de naissance, numéro d'identification etc.

Une fois que le serveur WEB a vérifié que l'identité de l'utilisateur est correcte et qu'il est autorisé à accéder au premier réseau de communication 30 à travers le premier profil 210, le serveur WEB génère, lors d'une étape de génération, de nouvelles données concernant l'autorisation de l'accès de l'utilisateur au premier réseau de communication 30 à travers le premier profil 210, par exemple un nouveau numéro d'identification personnel (PIN, PUK) associé au premier profil 210.

Le nouveau numéro d'identification personnel associé au premier profil 210 est adressé E104, E101 au serveur SM-SR, le serveur SM-SR adressant à son tour le nouveau numéro d'identification personnel à l'élément sécurisé 20 via la requête d'activation E101'. Le numéro d'identification personnel est ainsi stocké dans l'élément sécurisé 20 en lien avec le premier profil 210 pour des vérifications ultérieures concernant l'autorisation de l'accès de l'utilisateur au premier profil 210.

Selon un autre mode de réalisation non représenté sur les figures, la requête d'activation du premier profil est générée après l'écoulement d'une période de temps prédéterminée à compter de la génération de la situation de blocage du premier profil 210.

En particulier, la requête d'activation du premier profil est générée après l'écoulement d'une période prédéterminée à compter de la réception, par l'opérateur du premier réseau, de la notification E80.

En variante, le numéro d'identification personnel (PIN/PUK) associé au premier profil 210 est débloqué automatiquement après l'écoulement d'une seconde période de temps prédéterminée à compter de l'étape de notification E80.

Une fois que le premier profil 210 a été réactivé et que le deuxième profil 220 a été désactivé, l'élément sécurisé 20 émet lors d'une étape d'émission E105, une commande destinée au dispositif hôte 10, cette commande déclenchant une procédure d'attachement E105' du premier profil 210 au premier réseau de communication 30.

La commande émise par l'élément sécurisé 20 à l'étape d'émission E105 comporte par exemple une commande REFRESH telle que décrite dans la norme GSMA 12FAST.15, notamment au paragraphe 3.16 concernant la procédure d'activation de repli (« *Fall-back Activation Procedure* ») conduisant au redémarrage de l'élément sécurisé 20.

Ce démarrage déclenche cette nouvelle procédure d'attachement E105' au premier réseau 30 selon des mécanismes classiques. Puis, l'élément sécurisé 20 met en œuvre une étape de notification E106 de la désactivation du deuxième profil 220 et de l'activation du premier profil 210. Lors de cette étape de notification E106, l'élément sécurisé 20 initie une procédure de notification telle que décrite au paragraphe 4.1.1.11 de la norme GSMA 12FAST.15.

La notification de la désactivation du premier profil 210 et de l'activation du deuxième profil 220 au serveur SM-SR est envoyée par exemple par SMS. La notification envoyée au serveur SM-SR par exemple par SMS contient une notification de type « *tag* », c'est-à-dire des données codées de façon à représenter un message donné.

Comme décrit précédemment le tag '06' peut être utilisé pour notifier la désactivation du deuxième profil 210 et l'activation du premier profil 220.

Lors de cette procédure de notification, le serveur de gestion SM-SR est donc informé qu'une réactivation du premier profil 210 a été mise en œuvre.

L'ensemble des informations EIS concernant l'élément sécurisé et enregistré dans le serveur SM-SR est alors mis à jour lors d'une étape de mise à jour E107, afin de configurer le premier profil 210 comme profil actif et le deuxième profil 210 comme profil qui a été désactivé.

Puis, lors d'une première étape de notification E108, le serveur SM-SR notifie à l'opérateur du premier réseau de communication 30 que le premier profil 210 a été réactivé.

En outre, lors d'une seconde étape de notification E109, le serveur SM-SR notifie à l'opérateur du deuxième réseau de communication 40 que le deuxième profil 210 a été désactivé.

A la suite de ces étapes de notification E108, E109, l'utilisateur peut utiliser le dispositif hôte 10 à travers le premier profil 210.

On notera que les étapes E101 à E109 s'appuient sur des étapes décrites dans la norme GSMA 12FAST.15, notamment au paragraphe 3.16 concernant la procédure d'activation de repli (« *Fall-back Activation Procédure* »)*.*

## Revendications

1. Procédé de gestion de profils dans un élément sécurisé (20), l'élément sécurisé (20) comprenant un premier profil (210) associé à un premier réseau de communication (30) et un deuxième profil (220) associé à un deuxième réseau de communication (40), le premier profil (210) étant actif, le procédé comprenant des étapes de :
- désactivation (E20) dudit premier profil ; et
- activation (E21) dudit deuxième profil ;
le procédé étant **caractérisé en ce que** les étapes de désactivation (E20) et d'activation (E21) sont mises en œuvre à la suite de la détection d'un échec lors d'une vérification locale mise en œuvre dans ledit élément sécurisé et portant sur ledit premier profil (210) pour l'utilisation de ce dit premier profil (210).

2. Procédé de gestion de profils conforme à la revendication 1, caractérisé en ce la vérification locale comprend une étape de vérification (E1) dans ledit élément sécurisé (20) de l'autorisation de l'accès d'un utilisateur audit premier profil, et un échec de sécurité est détecté dans ledit élément sécurisé (20) en cas d'échec de vérification.

3. Procédé de gestion de profils conforme à la revendication 2, **caractérisé en ce que** la vérification dans l'élément sécurisé (20) de l'autorisation de l'accès d'un utilisateur comporte la vérification (E10) d'un numéro d'identification personnel (PIN) associée audit premier profil.

4. Procédé de gestion de profils conforme à l'une des revendications 2 ou 3, **caractérisé en ce que** la vérification dans l'élément sécurisé (20) de l'autorisation de l'accès d'un utilisateur comporte la vérification (E11) d'une clé de déblocage personnelle (PUK) associée audit premier profil.

5. Procédé de gestion de profils conforme à l'une des revendications 2 à 4, **caractérisé en ce que** la vérification dans l'élément sécurisé (20) de l'autorisation de l'accès de l'utilisateur comporte la vérification de données d'authentification de l'utilisateur.

6. Procédé de gestion de profils conforme à l'une des revendications 1 à 5, **caractérisé en ce que** la vérification locale comprend une étape de vérification de l'intégrité dudit premier profil (210) pour détecter un fonctionnement corrompu de celui-ci.

7. Procédé de gestion de profils conforme à la revendication 6, **caractérisé en ce que** la vérification de l'intégrité dudit premier profil (210) est effectuée durant une phase d'activation dudit premier profil (210)

8. Procédé de gestion de profils conforme à l'une des revendications 1 à 7, **caractérisé en ce qu'**il comprend en outre une étape de réactivation (E100) dudit premier profil, l'étape de réactivation comportant la désactivation dudit deuxième profil (220) et l'activation dudit premier profil (210).

9. Procédé de gestion de profils conforme à la revendication 8, **caractérisé en ce que** l'étape de réactivation (E100) du premier profil est mise en œuvre à réception (E101'), dans ledit élément sécurisé, d'une requête d'activation dudit premier profil (210), ladite requête d'activation provenant du premier réseau de communication (30) associé audit premier profil (210).

10. Procédé de gestion de profils conforme à la revendication 9, **caractérisé en ce que** ladite requête d'activation dudit premier profil (210) est générée à la demande d'un utilisateur.

11. Procédé de gestion de profils conforme à la revendication 9, **caractérisé en ce que** ladite requête d'activation dudit premier profil (210) est générée après l'écoulement d'une période de temps prédéterminée à compter d'une notification informant de la désactivation dudit premier profil (210) dans l'élément sécurisé (20).

12. Elément sécurisé comprenant un premier profil (210) associé à un premier réseau de communication (30) et un deuxième profil (220) associé à un deuxième réseau de communication (40), ledit premier profil (210) étant actif, l'élément sécurisé (20) comprenant:
- des moyens de désactivation dudit premier profil (210) ; et
- des moyens d'activation dudit deuxième profil (220) ;
et l'élément sécurisé (20) étant configuré pour que les moyens de désactivation et d'activation soient mis en œuvre à la suite de la détection d'un échec lors d'une vérification locale mise en œuvre dans ledit élément sécurisé et portant sur ledit premier profil (210) pour l'utilisation de ce dit premier profil (210).

13. Elément sécurisé conforme à la revendication 12, **caractérisé en ce qu'**il est une carte de type UICC embarquée (eUICC).

14. Dispositif hôte **caractérisé en ce qu'**il comporte un élément sécurisé conforme à l'une des revendications 12 ou 13.

15. Dispositif hôte conforme à la revendication 14, **caractérisé en ce qu'**il est un terminal mobile de communication.

## Patentansprüche

1. Verfahren zur Verwaltung von Profilen in einem sicheren Element (20), wobei das sichere Element (20) ein erstes, mit einem ersten Kommunikationsnetzwerk (30) assoziiertes Profil (210) und ein zweites, mit einem zweiten Kommunikationsnetzwerk (40) assoziiertes Profil (220) beinhaltet, wobei das erste Profil (210) aktiv ist, wobei das Verfahren folgende Schritte beinhaltet:
- Deaktivierung (E20) des ersten Profils; und
- Aktivierung (E21) des zweiten Profils;
wobei das Verfahren **dadurch gekennzeichnet ist, dass** die Schritte der Deaktivierung (E20) und der Aktivierung (E21) durchgeführt werden, nachdem bei einer lokalen Überprüfung, die in dem sicheren Element durchgeführt wird und die das erste Profil (210) betrifft, zur Verwendung dieses ersten Profils (210) ein Fehlschlag festgestellt wird.

2. Verfahren zur Verwaltung von Profilen nach Anspruch 1, **dadurch gekennzeichnet, dass** die lokale Überprüfung einen Schritt der Überprüfung (E1), in dem sicheren Element (20), der Zugangsberechtigung eines Benutzers zu dem ersten Profil beinhaltet und dass im Fall einer fehlgeschlagenen Überprüfung ein sicherheitsbezogener Fehlschlag in dem sicheren Element (20) festgestellt wird.

3. Verfahren zur Verwaltung von Profilen nach Anspruch 2, **dadurch gekennzeichnet, dass** die Überprüfung, in dem sicheren Element (20), der Zugangsberechtigung eines Benutzers die Überprüfung (E10) einer persönlichen Identifikationsnummer (PIN), die mit dem ersten Profil assoziiert ist, umfasst.

4. Verfahren zur Verwaltung von Profilen nach einem der Ansprüche 2 oder 3, **dadurch gekennzeichnet, dass** die Überprüfung, in dem sicheren Element (20), der Zugangsberechtigung eines Benutzers die Überprüfung (E11) einer persönlichen Entsperrnummer (PUK), die mit dem ersten Profil assoziiert ist, umfasst.

5. Verfahren zur Verwaltung von Profilen nach einem der Ansprüche 2 bis 4, **dadurch gekennzeichnet, dass** die Überprüfung, in dem sicheren Element (20), der Zugangsberechtigung des Benutzers die Überprüfung von Authentifizierungsdaten des Benutzers umfasst.

6. Verfahren zur Verwaltung von Profilen nach einem der Ansprüche 1 bis 5, **dadurch gekennzeichnet, dass** die lokale Überprüfung einen Schritt der Überprüfung der Integrität des ersten Profils (210) beinhaltet, um einen korrumpierten Betrieb desselben festzustellen.

7. Verfahren zur Verwaltung von Profilen nach Anspruch 6, **dadurch gekennzeichnet, dass** die Überprüfung der Integrität des ersten Profils (210) während einer Aktivierungsphase des ersten Profils (210) ausgeführt wird.

8. Verfahren zur Verwaltung von Profilen nach einem der Ansprüche 1 bis 7, **dadurch gekennzeichnet, dass** es außerdem einen Schritt der Reaktivierung (E100) des ersten Profils beinhaltet, wobei der Schritt der Reaktivierung die Deaktivierung des zweiten Profils (220) und die Aktivierung des ersten Profils (210) umfasst.

9. Verfahren zur Verwaltung von Profilen nach Anspruch 8, **dadurch gekennzeichnet, dass** der Schritt der Reaktivierung (E100) des ersten Profils bei Empfang (E101'), in dem sicheren Element, einer Anfrage nach Aktivierung des ersten Profils (210) durchgeführt wird, wobei die Anfrage nach Aktivierung von dem ersten Kommunikationsnetzwerk (30), das mit dem ersten Profil (210) assoziiert ist, stammt.

10. Verfahren zur Verwaltung von Profilen nach Anspruch 9, **dadurch gekennzeichnet, dass** die Anfrage nach Aktivierung des ersten Profils (210) auf Anforderung eines Benutzers erzeugt wird.

11. Verfahren zur Verwaltung von Profilen nach Anspruch 9, **dadurch gekennzeichnet, dass** die Anfrage nach Aktivierung des ersten Profils (210) nach Ablauf eines vorgegebenen Zeitraums ab einer Benachrichtigung, die über die Deaktivierung des ersten Profils (210) in dem sicheren Element (20) informiert, erzeugt wird.

12. Sicheres Element, das ein erstes, mit einem ersten Kommunikationsnetzwerk (30) assoziiertes Profil (210) und ein zweites, mit einem zweiten Kommunikationsnetzwerk (40) assoziiertes Profil (220) beinhaltet, wobei das erste Profil (210) aktiv ist, wobei das sichere Element (20) Folgendes beinhaltet:
- Mittel zur Deaktivierung des ersten Profils (210); und
- Mittel zur Aktivierung des zweiten Profils (220);
und wobei das sichere Element (20) dazu konfiguriert ist, dass die Mittel zur Deaktivierung und Aktivierung durchgeführt werden, nachdem bei einer lokalen Überprüfung, die in dem sicheren Element durchgeführt wird und die das erste Profil (210) betrifft, zur Verwendung dieses ersten Profils (210) ein Fehlschlag festgestellt wird.

13. Sicheres Element nach Anspruch 12, **dadurch gekennzeichnet, dass** es eine eingebettete UICC-Karte (eUICC) ist.

14. Host-Vorrichtung, **dadurch gekennzeichnet, dass** sie ein sicheres Element nach einem der Ansprüche 12 oder 13 umfasst.

15. Host-Vorrichtung nach Anspruch 14, **dadurch gekennzeichnet, dass** sie ein mobiles Kommunikationsendgerät ist.

## Claims

1. Method of managing profiles in a secure element (20), wherein the secure element (20) comprises a first profile (210) associated with a first communication network (30), and a second profile (220) associated with a second communication network (40), wherein the first profile (210) is active, and the method comprises the following steps:
- deactivation (E20) of said first profile; and
- activation (E21) of said second profile;
wherein the method is **characterized in that** the steps of deactivation (E20) and activation (E21) are carried out following the detection of a failure during a local verification carried out in said secure element and pertaining to said first profile (210) for the use of this said first profile (210).

2. Method of managing profiles according to Claim 1, **characterized in that** the local verification comprises a step for the verification (E1) in said secure element (20) of the authorization for access of a user to said first profile, wherein a security failure is detected in said secure element (20), in the event of the failure of verification.

3. Method of managing profiles according to Claim 2, **characterized in that** the verification in the secure element (20) of the authorization for the access of a user comprises the verification (E10) of a personal identification number (PIN) associated with said first profile.

4. Method of managing profiles according to one of Claims 2 and 3, **characterized in that** the verification in the secure element (20) of the authorization for the access of a user comprises the verification (E11) of a personal unblocking key (PUK) associated with said first profile.

5. Method of managing profiles according to one of Claims 2 to 4, **characterized in that** the verification in the secure element (20) of the authorization for the access of the user comprises the verification of authentication data for the user.

6. Method of managing profiles according to one of Claims 1 to 5, **characterized in that** the local verification comprises a step for the verification of the integrity of said first profile (210), in order to detect the corrupted operation of the latter.

7. Method of managing profiles according to Claim 6, **characterized in that** the verification of the integrity of said first profile (210) is executed during an activation phase of said first profile (210).

8. Method of managing profiles according to one of Claims 1 to 7, **characterized in that** it further comprises a step (E100) for the reactivation of said first profile, wherein the reactivation step comprises the deactivation of said second profile (220) and the activation of said first profile (210).

9. Method of managing profiles according to Claim 8, **characterized in that** the step (E100) for the reactivation of the first profile is carried out upon the reception (E101'), in said secure element, of a request for the activation of said first profile (210), wherein said activation request originates from the first communication network (30), associated with said first profile (210).

10. Method of managing profiles according to Claim 9, **characterized in that** said request for the activation of said first profile (210) is generated at the request of a user.

11. Method of managing profiles according to Claim 9, **characterized in that** said request for the activation of said first profile (210) is generated upon the expiry of a predetermined time interval, with effect from a notification of the deactivation of said first profile (210) in the secure element (20).

12. Secure element comprising a first profile (210), associated with a first communication network (30), and a second profile (220), associated with a second communication network (40), wherein said first profile (210) is active, and the secure element (20) comprises:
- means for the deactivation of said first profile (210); and
- means for the activation of said second profile (220) ;
wherein the secure element (20) is configured such that the means for deactivation and activation are carried out following the detection of a failure during a local verification carried out in said secure element and pertaining to said first profile (210) for the use of this said first profile (210).

13. Secure element according to Claim 12, **characterized in that** said secure element is a card of the embedded UICC type (eUICC).

14. Host device, **characterized in that** it comprises a secure element according to either of Claims 12 and 13.

15. Host device according to Claim 14, **characterized in that** said host device is a portable communication terminal.
